Europäisches Patentamt

(19) European Patent Office

Office européen des brevets

(11) Veröffentlichungsnummer : **0 127 088**
**B1**

(12) **EUROPÄISCHE PATENTSCHRIFT**

(45) Veröffentlichungstag der Patentschrift :
13.12.89

(51) Int. Cl.⁴ : **G 01 S 17/74, H 04 B 9/00**

(21) Anmeldenummer : 84105665.8

(22) Anmeldetag : 18.05.84

(54) Verfahren zur Informationsübertragung.

(30) Priorität : 26.05.83 DE 3319158

(43) Veröffentlichungstag der Anmeldung :
05.12.84 Patentblatt 84/49

(45) Bekanntmachung des Hinweises auf die Patenterteilung : 13.12.89 Patentblatt 89/50

(84) Benannte Vertragsstaaten :
CH FR GB LI

(56) Entgegenhaltungen :
DE--A-- 2 142 944
FR--A-- 2 290 673
US--A-- 4 361 911

(73) Patentinhaber : Precitronic Gesellschaft für Feinmechanik und Electronic m.b.H
Leverkusenstrasse 13
D-2000 Hamburg 50 (DE)

(72) Erfinder : Eichweber, Kurt
Schützenstrasse 75-85
D-2000 Hamburg 50 (DE)

(74) Vertreter : Glawe, Delfs, Moll & Partner Patentanwälte
Postfach 26 01 62 Liebherrstrasse 20
D-8000 München 26 (DE)

## Beschreibung

Die Erfindung betrifft ein Verfahren zum Übertragen von Information zwischen einer Abfragestation und einer Antwortstation mittels Laserstrahlung, die von der Abfragestation als Hin-Signal, das zeitweilig mit erster Information, die von der Abfragestation zur Antwortstation übertragen werden soll, enthaltender Kodierung, zeitweilig in Festfrequenz und/oder fester Kodierung moduliert ist, ausgesendet und von der Antwortstation einerseits empfangen und ausgewertet und andererseits als Rücksignal von dieser rückreflektiert und mit einer Modulation beaufschlagt wird, die mit zweiter Information kodiert ist, die von der Antwortstation zur Abfragestation übertragen werden soll, wobei die Rückreflexion zunächst unterbunden und dann in Abhängigkeit von der Auswertung einer im Hin-Signal enthaltenen Kennung freigegeben wird.

Ein derartiges Verfahren ist aus FR-A 2 290 673 und DE-B6 24 53 077 bekannt.

Bei diesem bekannten Übertragungssystem wird von einer Abfragestation ein Hin-Signal ausgesendet, welches mit einem Informationscode moduliert ist. Dieses modulierte Signal wird von der Antwortstation empfangen und ausgewertet. Bei Übereinstimmung des Kennungscodes mit einer Freund-Kennung wird die Rückreflexion freigegeben. Bei dieser Rückreflexion wird das nunmehr mit einer Festfrequenz modulierte Hin-Signal mit einer Modulation beaufschlagt und zur Abfragestation rückreflektiert.

Bei einem solchen System besteht das Problem, daß zum Zwecke der für eine korrekte Modulation notwendigen Synchronisierung Abfragestation und Antwortstation auf dieselbe Festfrequenz abgestimmt sein müssen, was eine Entschlüsselung durch die Gegnerseite erleichtern könnte und damit die Gefahr von Abhören oder gar Täuschung heraufbeschwört. Wenn andererseits Abfrage- und Antwortstation nicht von vorne herein auf eine feste Frequenz abgestimmt sind, besteht die Gefahr, daß wegen fehlender Synchronisation Modulationsstörungen auftreten und damit die übertragene Information verfälscht wird.

Der Erfindung liegt deshalb die Aufgabe zugrunde, ein Verfahren der eingangs genannten Art zu schaffen, welches einen sicheren, nicht täuschbaren und nicht simulierbaren Nachrichtenaustausch zwischen zwei Kommunikationspartnern, von denen einer zunächst noch nicht identifiziert ist, auf optischem Wege ermöglichen und einen kodierten Datenaustausch einleiten kann.

Diese Aufgabe wird erfindungsgemäß bei dem eingangs genannten Verfahren dadurch gelöst, daß die Kennung eine im Hin-Signal das Ende einer die erste Information anzeigende Kodierung enthält, die die vorher unterbundene Rückreflexion an der Antwortstation freigibt, daß bei Beginn der Rückreflexion zunächst ein das Erkennen der Kodierung bestätigendes Anfangssignal, insbesondere eine unveränderte Reflexion des Hin-Signals übertragen wird, das durch das Anfangssignal die Umschaltung der Abfragestation auf die Festfrequenz und/oder die feste Kodierung des Hin-Signals ausgelöst wird, und daß an der Antwortstation die Festfrequenz oder Festkodierung des Hin-Signals detektiert und das rückreflektierte Signal mit der zweiten Information moduliert wird.

Vorteilhafterweise sind Abfragestation und Antwortstation dabei gleichartig ausgestaltet, um einen Wechselbetrieb einer stör- und täuschsicheren Informationsübertragung möglich zu machen.

Diese erfindungsgemäße Lösung hat den Vorteil, daß die Abfragestation eine mehr oder weniger beliebige Festfrequenz oder Festkodierung für das Hin-Signal wählen kann, wodurch die Abhör- und Täuschsicherheit erheblich erhöht wird, ohne daß die Gefahr besteht, daß dadurch eine synchronisierte Modulation des Hin-Signals für die Rückreflexion zur Abfragestation gefährdet wird.

Im folgenden wird die Erfindung anhand einer bevorzugten Ausführungsform unter Bezugnahme auf die Figuren genauer beschrieben. Es zeigen :

Fig. 1a bis 1i die einzelnen Verfahrensstufen des erfindungsgemäßen Systems ;

Fig. 2 eine mögliche Ausführungsform des erfindungsgemäßen Systems und

Fig. 3 eine vorteilhafte Ausführungsform des senderseitigen Lasers.

Das Übertragungssystem besteht aus einem Sender 1 als Abfragestation S und einer Antwortstation E mit einem Empfangs- und Rückreflexionssystem 3.

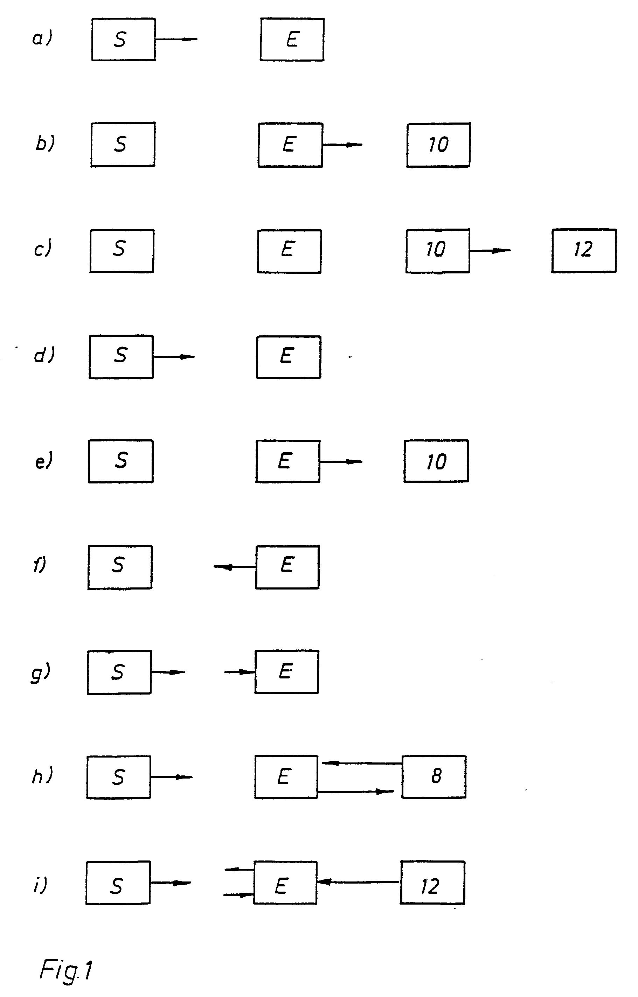

Zu Beginn des Übertragungsvorganges sendet die Abfragestation S ein kodiertes, optisches oder Licht-Signal aus und richtet dieses auf ein noch unidentifiziertes, kooperatives Ziel, nämlich die Antwortstation E (Fig. 1a). Dieses kodierte Signal wird durch einen Laser 2 erzeugt und über ein optisches System 4 auf einen Sensor 6 der Antwortstation gerichtet.

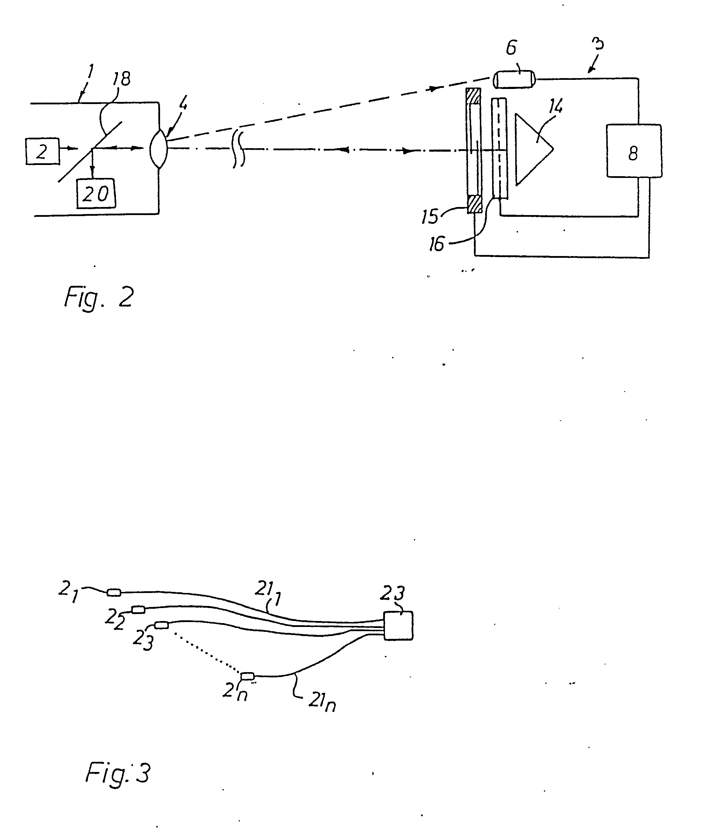

Am Ziel werden die Signale der Abfragestation durch den Sensor 6 (Fig. 2) empfangen und durch die damit verbundene Steuerschaltung 8 verstärkt und in einer in dieser Steuerschaltung 8 enthaltenen Dekodier- bzw. Entschlüsselungsschaltung 10 dechiffriert (Fig. 1b).

Anschließend wird der Informations- oder Kommunikationsinhalt der Signale weitergeleitet an einen in der Steuerschaltung 8 enthaltenen Speicher 12 und dort gespeichert oder an eine geeignete andere Station weitergegeben (Fig. 1c). Am Ende der Übertragung von Abfragestation an Antwortstation sendet die Anfragestation S eine Kodierung zur Kennzeichnung, daß die Anfragenachricht beendet ist (Fig. 1d). Diese Endkodierung wird von der Antwortstation E empfangen (Fig. 1e) und weitergegeben an die Dekodierschaltung 10. Bei Übereinstimmung dieser Kodierung mit einem in der Antwortstation E gespeicherten Schlüssel-Code wird ein Rückreflektor 14, z. B. ein Tripelspiegel freigegeben und/oder auf die Abfragestation ausgerichtet. Dadurch wird als « Quittung » der letzte Abschnitt der Anfragesignale von der Antwortstation an die Abfragestation zurückreflektiert (Fig. 1f). Dieses Bestätigungssignal wird über einen Strahlteiler 18 in der Abfragestation S einem Empfänger mit dazugehörigen Dekodierer zugeleitet, der bei Empfang der Bestätigung das Abfragesystem S auf eine feste Frequenz oder eine feste Kodierung umschaltet (Fig. 1g) und diese Festkodierung während der Dauer der Informationsübertragung aufrechterhält. Die Antwortstation empfängt das festkodierte Signal und leitet es weiter an die Steuerschaltung 8, welche bei Erkennen der Festkodierung den Modulator 16 in eine auf diesen Festtakt abgestimmte Betriebsbereitschaft einstellt (Fig. 1h). Im weiteren Verlauf des Informationsaustausches zwischen Abfrage- und Antwortstation wird das von der Abfragestation gesendete festkodierte Signal mit Daten moduliert, die aus einem Speicher 12 oder aus einem sonstigen geeigneten Datengeber entnommen werden, und dieses mit den Daten modulierte festkodierte Signal an die Abfragestation zurückreflektiert. Diese Daten können von einem Kreiselkompaß, einem Peildiopter und/oder einem Entfernungsmesser oder sonstigen externen Peripheriegeräten erzeugt sein und an die Steuerschaltung 8 weitergegeben werden.

In Fig. 2 wird eine bevorzugte Ausführungsform des Übertragungssystems beschrieben.

Der Laser 2 der Abfragestation 1 sendet sein kodiertes, optisches oder Licht-Signal durch einen Strahlteiler 18, z. B. einen halbdurchlässigen Spiegel, über ein optisches Übertragungssystem 4 in Richtung auf die Antwortstation, bzw. den Empfänger 3. Diese Abstrahlung wird vorzugsweise mit einer möglichst breiten Sendekeule abgestrahlt, um das abgefragte Ziel E oder den Kommunikationspartner mit Sicherheit zu überdecken.

An der Antwortstation wird das abgestrahlte kodierte Signal durch einen fotoelektrischen Sensor 6 empfangen, der als Fotodiode oder bei gewünschten hohen Empfindlichkeiten und Schaltgeschwindigkeiten z. B. als Avalanche-Fotodiode ausgebildet ist. Das Ausgangssignal dieses Sensors wird einer Steuerschaltung 8 zugeleitet, die die üblichen notwendigen Schaltelemente, wie z. B. Diskriminatoren, Dekoder 10, Speicher 12 u. dgl. enthält.

In Abhängigkeit von der in dem empfangenen Signal enthaltenen Information steuert die Steuerschaltung 8 einen Modulator 16, der dem Tripelspiegel 14 so vorgeschaltet ist, daß er im Wege des zu reflektierenden Signals von der Abfragestation 1 liegt. Dieser Modulator 16 ist von an sich bekannter Art, d. h. seine Lichtdurchlässigkeit wird z. B. durch Anlegen eines elektrischen Signals geändert.

Die Lichtdurchlässigkeit kann aber auch durch andere physikalische Effekte z. B. durch Änderung des Brechungsindexes mittels akustischer Wellen geeignet variiert werden.

Dieser Modulator kann sowohl zur Modulation des rückreflektierten Signals dienen, als auch als optischer Dauerverschluß wirken, solange das Übertragungssystem außer Betrieb ist.

Alternativ kann der Tripelspiegel auch abgeblendet werden durch eine Klappe oder ähnliche Mittel, die erst dann aus dem Lichtweg entfernt wird, wenn die Abfragestation eine geeignete Kennung übermittelt hat.

In Fig. 2 ist beispielsweise dem Modulator eine elektrisch durch die Steuerschaltung über einen Verstärker V steuerbare Irisblende 15 als Verschlußelement vorgelagert.

Die rückreflektierten Signale von der Abfragestation werden mit der aufmodulierten Information wieder von der Abfragestation über das optische System 4 empfangen und daraufhin durch den Strahlteiler 18 einem geeigneten Empfänger 20 zugeleitet, der die aufmodulierte Information aus dem festkodierten Signal herausfiltert und entweder speichert oder verwertet.

Vorteilhafterweise können Abfragestation und Antwortstation komplementär bzw. gleich ausgestaltet sein, so daß beide als Sende- bzw. Empfangsstation 1 bzw. 2 arbeiten können. Zu diesem Zwecke könnte die Abfragestation 1 von Fig. 2 statt des Empfängers 20 einen Schaltkreis der Art der Antwortstation 3 von Fig. 2 enthalten und die Antwortstation identisch ausgestaltet sein.

Fig. 3 zeigt eine besonders vorteilhafte Ausgestaltung des Lasers 2 der Abfragestation 1 von Fig. 2. Dieser Laser besteht aus einzelnen Lasern $2_1$, $2_2$, $2_3$ ... $2_n$, die in an sich bekannter Weise über Lichtleitfasern $21_1$ ... $21_n$ ausgekoppelt werden und durch einen optischen Integrator 23, z. B. einen Glaskörper, zusammengefaßt bzw. integriert werden.

Eine derartige Anordnung ist deshalb für die Erfindung von Vorteil, weil Laserdioden im Dauerbetrieb normalerweise nicht mit voller Ausgangsleistung betrieben werden können, sondern für kurze Zeit, z. B. 5-10 Watt jeweils abgeben können. Mit einer solchen Leistung ist eine Entfernung von einigen Kilometern bei einer Keulenbreite der Sendekeule von 1/2-1 mrad zu überbrücken.

Erfindungsgemäß werden zur Erhöhung der Pulswiederholfrequenz nicht alle Laserdioden $2_1$, $2_2$, $2_3$ ... $2_n$ zur gleichen Zeit angesteuert, sondern sequentiell in Gruppen nacheinander. Diese gebündelten und in Gruppen gepulsten Austrittssignale der Abfragelaser $2_1$-$2_n$ werden durch den optischen Integrator so übereinander gekoppelt, daß sie für die Antwortstation eine Punktquelle für die optische Strahlung bilden, d. h. daß die von der Abfragestation 1 abgesendeten Signal-Bursts die Antwortstation homogen ausleuchten.

Durch diese erfindungsgemäße Ausgestaltung des Abfragelasers können höhere Pulsraten als 30 KHz möglich gemacht werden, die einen genügend großen Energieinhalt zur Überbrückung größerer Entfernungen ermöglichen.

Die einzelnen Laser dieser Lasergruppe können z. B. GaAs-Dioden sein, die etwa 10 Watt jeweils leisten können, z. B. 5-10 KHz mit typischerweise 30-100 Nanosekunden Pulsbreite.

## Patentansprüche

1. Verfahren zum Übertragen von Information zwischen einer Abfragestation und einer Antwortstation mittels Laserstrahlung, die von der Abfragestation als Hin-Signal, das zeitweilig mit erster Information, die von der Abfragestation zur Antwortstation übertragen werden soll, enthaltender Kodierung, zeitweilig in Festfrequenz und/oder fester Kodierung moduliert ist, ausgesendet und von der Antwortstation einerseits empfangen und ausgewertet und andererseits als Rücksignal von dieser rückreflektiert und mit einer Modulation beaufschlagt wird, die mit zweiter Information kodiert ist, die von der Antwortstation zur Abfragestation übertragen werden soll, wobei die Rückreflexion zunächst unterbunden und dann in Abhängigkeit von der Auswertung einer im Hin-Signal enthaltenen Kennung freigegeben wird, dadurch gekennzeichnet, daß die Kennung eine im Hin-Signal das Ende einer die erste Information anzeigende Kodierung enthält, die die vorher unterbundene Rückreflexion an der Antwortstation freigibt, daß bei Beginn der Rückreflexion zunächst ein das Erkennen der Kodierung bestätigendes Anfangssignal, insbesondere eine unveränderte Reflexion des Hin-Signals übertragen wird, daß durch das Anfangssignal die Umschaltung der Abfragestation auf die Festfrequenz und/oder die feste Kodierung des Hin-Signals ausgelöst wird, und daß an der Antwortstation die Festfrequenz oder Festkodierung des Hin-Signals detektiert und das rückreflektierte Signal mit der zweiten Information moduliert wird.

2. Verfahren nach Anspruch 1, dadurch gekennzeichnet, daß als Abfragestation und als Antwortstation gleichartig ausgebildete Stationen verwendet werden.

3. Verfahren nach Anspruch 1 oder 2, dadurch gekennzeichnet, daß die Laserstrahlung mittels mehrerer Laserdioden erzeugt wird, deren Licht zu einem gemeinsamen Strahlungsbündel zusammengefaßt wird, und daß die einzelnen Laserdioden zur Erhöhung der Pulswiederholungsfrequenz sequentiell in Gruppen oder einzeln nacheinander angesteuert werden.

## Claims

1. A method of transmitting information between an inquiry station and a response station by means of laser radiation, which information is emitted by the inquiry station as a forward signal, which signal is temporarily modulated with a code including first information, which information is to be transmitted from the inquiry station to the response station, and which signal is temporarily modulated to a fixed frequency and/or a fixed code and is received and evaluated by the response station, on the one hand, and is reflected back, on the other hand, as a return signal and undergoes a modulation which is coded with second information which is to be transmitted from the response station to the inquiry station, wherein the back reflection is initially inhibited and is then triggered as a function of the evaluation of an identifier contained in the forward signal, characterised in that the identifier contains a code in the forward signal indicating the end of the first information, which code triggers the previously inhibited back reflection at the response station, in that at the start of the back reflection there is firstly transmitted an initial signal, in particular an unmodified reflection of the forward signal, which confirms recognition of the code, in that the initial signal triggers the switching of the inquiry station to the fixed frequency and/or the fixed code of the forward signal, and in that the fixed frequency or fixed code of the forward signal is detected at the response station and the back-reflected signal is modulated with the second information.

2. A method according to Claim 1, characterised in that similarly designed stations are used as the inquiry station and the response station.

3. A method according to Claim 1 or 2, characterised in that the laser radiation is generated by means of a plurality of laser diodes, the light of which is combined to form a common radiation beam, and in that, in order to increase the pulse-repetition frequency, the individual laser diodes are activated sequentially in groups or individually one after the other.

## Revendications

1. Procédé de transmission d'informations entre un poste d'interrogation et un poste de réponse au moyen d'un rayonnement laser qui est émis par le poste d'interrogation en tant que signal aller qui est modulé temporairement avec un codage contenant une première information à transmettre du poste d'interrogation au poste de réponse et temporairement en fréquence fixe et/ou en codage fixe, et qui est d'une part reçu et évalué par le poste de réponse et d'autre part réfléchi en retour par celui-ci en tant que signal retour et est soumis à une modulation qui est codée avec une seconde information qui doit être transmise du poste de réponse au poste d'interrogation, la réflexion en retour étant d'abord empêchée, puis étant débloquée en fonction de l'évaluation d'un identificateur contenu dans le signal aller, caractérisé en ce que l'identificateur contient un codage qui indique dans le signal aller la fin de l'une des premières informations et qui débloque la réflexion en retour, précédemment empêchée, au niveau du poste de réponse, en ce qu'au début de la réflexion en retour, il est tout d'abord transmis un signal initial qui confirme l'identification du codage, en particulier une réflexion non modifiée du signal aller, en ce que la commutation du poste d'interrogation sur la fréquence fixe et/ou le codage fixe du signal aller est déclenchée par ce signal initial, et en ce qu'au niveau du poste de réponse, la fréquence fixe ou le codage fixe du signal aller est détecté et le signal réfléchi en retour est modulé avec la seconde information.

2. Procédé selon la revendication 1, caractérisé en ce que des postes réalisés sous une forme semblable sont utilisés comme poste d'interrogation et comme poste de réponse.

3. Procédé selon la revendication 1 ou 2, caractérisé en ce que le rayonnement laser est produit au moyen de plusieurs diodes laser dont la lumière est réunie en un faisceau commun, et en ce qu'afin d'accroître la fréquence de répétition des impulsions, les différentes diodes laser sont activées par groupes en séquence ou individuellement l'une après l'autre.

a) S → E

b) S   E → 10

c) S   E   10 → 12

d) S → E

e) S   E → 10

f) S   ← E

g) S →   → E

h) S →   E ← 8 / →

i) S →   → E ← 12

Fig.1

Fig. 2

Fig. 3